# EUROPÄISCHE PATENTSCHRIFT

(11) **EP 1 347 024 B1**
(45) Veröffentlichungstag und Bekanntmachung des Hinweises auf die Patenterteilung: **11.03.2009**
(21) Anmeldenummer: 03001817.0
(22) Anmeldetag: 29.01.2003
(51) Int. Cl.: C09D 163/00, C09D 133/04, C09D 183/00

(54) **Lufttrocknende, silanhaltige Beschichtungsmittel**
Coating composition drying in the air containing silane
Composition de revêtement séchant à l'air contenant du silane

(30) Priorität: 21.03.2002 DE 10212523
(43) Veröffentlichungstag der Anmeldung: 24.09.2003
(73) Patentinhaber: Evonik Degussa GmbH, 45128 Essen (DE)
(72) Erfinder: Borup, Björn, Dr., 79618 Rheinfelden (DE); Edelmann, Roland, 79664 Wehr (DE); Monkiewicz, Jaroslaw, Dr., 79618 Rheinfelden (DE); Edinger, Andrea, 79664 Wehr (DE)

(56) Entgegenhaltungen:
- EP-A- 0 274 112
- DE-A- 4 205 819
- DE-A- 19 961 632
- DATABASE WPI Section Ch, Week 198603 Derwent Publications Ltd., London, GB; Class A14, AN 1986-016539 XP002288382 & JP 60 238372 A (TOA GOSEI CHEM IND LTD) 27. November 1985 (1985-11-27)
- HATSUO ISHIDA ET AL.: "The structure of aminofunctional silane coupling agents : 1. gamma-aminopropyltriethoxysilane and its analogues" POLYMER, Bd. 23, 1982, Seiten 251-257, XP002288388

## Beschreibung

Die vorliegende Erfindung betrifft ein lufttrocknendes, silanhaltiges Beschichtungsmittel, d. h. eine Beschichtungszusammensetzung, die ein Epoxidharz oder Acrylharz, gegebenenfalls einen Kieselsäureester bzw. ein Alkylsilikat, eine Aminoalkylsilankomponente und gegebenenfalls ein Organoalkoxysilan sowie mögliche Hilfsstoffe enthält. Weiterhin betrifft die vorliegende Erfindung die Verwendung solcher Beschichtungsmittel. Ferner betrifft die vorliegende Erfindung Beschichtungen daraus sowie entsprechend beschichtete Substrate und Artikel.

Beschichtungsmittel, wie Farben und Lacke, sind lange bekannt. Dies betrifft eine ganze Reihe von möglichen Anwendungen, man denke bloß an große Metallstrukturen, wie Schiffe, Bahnwaggons, Industrieanlagen, Brücken oder auch andere Bauten mit weitgehend glatten Oberflächen, die vor Witterungseinflüssen, Korrosion oder Verschmutzung, z. B. Graffiti, zu schützen sind.

Beispielsweise kennt man silanbasierende, strahlenvernetzende Systeme sowie thermisch härtende Systeme (EP-A 0 424 645, EP-A 0 408 047). Für die Aushärtung solcher Beschichtungen ist eine UV-, Elektronenstrahlquelle oder ein Ofen in entsprechender Größe erforderlich.

Beschichtungssysteme auf Basis von Siliconharz sind aus EP-A 0 670 870 bekannt. Hier werden Beschichtungssysteme bereitgestellt, die auf Basis von Siliconharzen und Aminosilanen aufgebaut sind. Ebenfalls ist Siliconharz oft aus Kostengründen nicht zweckmäßig und erlaubt nicht den Einsatz in einer großen Anzahl an Anwendungen, da diese viele verschiedene Harzarten und Sorten verlangen.

Zweikomponentensysteme sind aus WO 96/16109 bekannt. Hier wird das Silan sowohl im Binder als auch in der Härterkomponente verwendet. Allerdings sind solche Zweikomponentensysteme nicht zweckmäßig, da aufwendig, nicht lagerfähig und darüber hinaus vor Ort nicht gewährleistet ist, dass die Komponenten in den richtigen Proportionen zugemischt werden.

Ein Einkomponentensystem ist beispielsweise aus EP-A 0 786 499 bekannt. Dieses feuchtigkeitsvernetzende Mittel besteht aus mindestens einem multifunktionellen Acrylat, mindestens einem Titan- oder Siliciumester und einem hohen Anteil mindestens eines aminofunktionellen Trialkoxysilans. In diesem System kann nur Acrylharz eingesetzt werden. Dies schränkt die Flexibilität der Beschichtung deutlich ein, die Anwendungsmöglichkeiten zu vergrößern.

Ferner weisen Beschichtungen solcher Systeme nur auf Materialien wie Glas, Holz, Polycarbonat, Polyethylen, Polypropylen, Polyethylenterephthalat und Polystyrol eine hinreichende Haftung auf. Die Haftung auf Stahl und anderen Materialien, wie Aluminium, ist deutlich geringer.

Ferner weisen Beschichtungen auf Basis von Aminosilanen oft eine geringe Wasserstabilität und eine schlechte Haftung nach Wasserbehandlung auf. Die Beschichtungen sollten mitunter auch Eigenschaften wie Kratzfestigkeit und Wasserfestigkeit aufweisen.

Der vorliegenden Erfindung lag die Aufgabe zugrunde, eine weitere an der Luft trocknende Beschichtungszusammensetzung bereitzustellen. Ein besonders Anliegen war es, das Haftvermögen einer entsprechenden Beschichtung auf einer Aluminiumoberfläche zu verbessern.

Die Aufgabe wird erfindungsgemäß entsprechend den Angaben der Patentansprüche gelöst.

Für den Begriff Acrylharz wird nachfolgend auch der Begriff Acrylatharz verwendet. Ferner wird für den Begriff Acrylmonomer auch der Begriff Acrylharzmonomer benutzt. Weiterhin soll nachfolgend unter dem Begriff Acrylat sowohl Acrylharz als auch Acrylmonomer verstanden werden.

Überraschenderweise wurde gefunden, dass eine wasserfreie Zubereitung, die
(i) mindestens ein Epoxidharz, mindestens ein Acrylharz, mindestens ein Acrylharzmonomer, mindestens ein Copolymerisat, das auf einem Acryl- oder Epoxidmonomer basiert, beispielsweise einem Epoxyacrylat, Urethanacrylat, Polyesteracrylat, um nur einige zu nennen, oder ein Gemisch aus den zuvor genannten Komponenten,
(ii) mindestens einen Kieselsäureester und/oder ein Alkylsilikat,
(iii) mindestens ein Aminoalkylsilan, ein Gemisch aus Aminoalkylsilanen oder Kondensate oder Cokondensate daraus und
(iv) gegebenenfalls ein Organosilan, ein Gemisch aus Organosilanen oder entsprechender Kondensate oder Cokondensate
enthält,
wobei im Falle einer acrylathaltigen Beschichtungszusammensetzung das molare Verhältnis der Aminogruppen des Aminoalkylsilans zu den funktionellen Acrylatgruppen des Acrylatharzes weniger als 7 : 1, vorzugsweise 6,5:0,1, besonders bevorzugt 6 : 0,3, ganz besonders bevorzugt 5 : 0,5 und insbesondere 4:0,8, beträgt, in einfacher und wirtschaftlicher Weise erhältlich ist, gute Lagereigenschaften besitzt, als niedrigviskose und lufttrocknende Beschichtungszusammensetzung leicht auf ein Substrat aufzubringen ist und eine hervorragende Haftung der ausgehärteten Beschichtung auf dem Substrat erzielt wird, insbesondere auf Aluminiumoberflächen. So kann in vorteilhafter Weise ein weiteres lufttrocknendes Einkomponentensystem mit all seinen Vorteilen als Beschichtungsmittel bereit gestellt werden.

Bei der vorliegenden Erfindung bedeutet "lufttrocknend", dass die vorliegende Zubereitung nach Applikation auf einem Substrat in Gegenwart von Luft aushärtet, wobei die Luft vorzugsweise eine relative Luftfeuchtigkeit von 10 bis 100 %, besonders bevorzugt von 15 bis 95 %, ganz besonders bevorzugt 20 bis 90 %, insbesondere 25 bis 80 %, und eine Temperatur im Bereich von -10 bis 120 °C, besonders bevorzugt von 5 bis 80 °C, ganz besonders bevorzugt von 10 bis 60 °C, insbesondere von Raumtemperatur bis 40 °C, aufweist.

Erfindungsgemäße Beschichtungen besitzen durchweg gute Hafteigenschaften und härten in der Regel innerhalb von 1 bis 7 Tagen aus, wobei die Beschichtung geeigneterweise nach 0,1 bis 6 Stunden, vorzugsweise nach 0,2 bis 4 Stunden und besonders bevorzugt nach 0,3 bis 2 Stunden, bereits staubtrocken ist. Man kann den Vorgang des Aushärtens aber auch durch eine "Saunabehandlung" mit hoher Temperatur, vorzugsweise 50 bis 100°C, und hoher Luftfeuchtigkeit, vorzugsweise 60 bis 95 % rel. Luftfeuchte, nochmals deutlich beschleunigen.

Gegenstand der vorliegenden Erfindung ist somit eine wasserfreie Zubereitung als eine an der Luft härtende Beschichtungszusammensetzung, die
(i) mindestens ein Epoxidharz oder mindestens ein Acrylharz oder mindestens ein Acrylharzmonomer oder mindestens ein Copolymerisat, das auf einem Acryl- oder Epoxidmonomer basiert, oder ein Gemisch aus zwei oder mehreren der zuvor genannten Einsatzstoffe,
(ii) mindestens einen Kieselsäureester und/oder mindestens ein Alkylsilikat,
(iii) mindestens ein Aminoalkylsilan, ein Gemisch aus Aminoalkylsilanen oder Kondensate oder Cokondensate daraus und
(iv) gegebenenfalls ein Organosilan, ein Gemisch aus Organosilanen oder Kondensate oder Cokondensate
enthält,
wobei im Falle einer acrylathaltigen Beschichtungszusammensetzung das molare Verhältnis der Aminogruppen des Aminoalkylsilans zu den funktionellen Acrylatgruppen des Acrylharzes weniger als 7 : 1 beträgt.

Eine erfindungsgemäße Zubereitung enthält geeigneterweise
2,5 bis 50 Gew.-%, vorzugsweise 3,5 bis 40 Gew.-%, besonders bevorzugt 5 bis 25 Gew.-%, der Komponente (i),
0,5 bis 60 Gew.-%, vorzugsweise 0,5 bis 50 Gew.-%, besonders bevorzugt 5 bis 40 Gew.-%, der Komponente (ii),
15 bis 90 Gew.-%, vorzugsweise 20 bis 80 Gew.-%, besonders bevorzugt 30 bis 70 Gew.-%, der Komponente (iii),
0 bis 60 Gew.-%, vorzugsweise 0,5 bis 50 Gew.-%, besonders bevorzugt 5 bis 40 Gew.-%, der Komponente (iv) und
0 bis 50 Gew.-%, vorzugsweise 0 bis 40 Gew.-%, besonders bevorzugt 0 bis 30 Gew.-%, einer oder mehrerer Komponenten (v) als weitere Zusätze,
wobei die Anteile der in der erfindungsgemäßen Zusammensetzung enthaltenen Komponenten in Summe maximal 100 Gew.-% ergeben.

Bevorzugt besteht die Komponente (i) mindestens aus einem Epoxidharz oder einem Acrylharz oder einem Acrylharzmonomer. Ebenfalls sind Copolymerisate, wie z. B. Polyesteracrylate, Urethanacrylate und Epoxyacrylate, geeignet. Vorzugsweise enthält eine erfindungsgemäße Zubereitung als Komponente (i) mindestens ein aromatisches Epoxidharz, wie z. B. ARALDIT^{®} GY 260, oder ein aliphatisches Epoxidharz, wie z. B. Uvacure^{®} 1500, oder ein Acrylharzmonomer, wie z. B. Sartomer^{®} 494 (ein epoxyliertes Pentaerythrittetraacrylat) oder Sartomer^{®} 454 (ein epoxyliertes Trimethylolpropantriacrylat) oder ein Copolymerisat der Reihe aliphatisches Urethanacrylat, z. B. Ebecryl^{®} 8210 oder Ebecryl® 8402, oder ein Epoxyacrylat, wie z. B. Sartomer^{®} CN 104, CN 981 und CN 934 (aliphatische Urethandiacrylate), CN 976 (aromatische Urethanacrylate), oder ein monofunktionelles Acrylat, wie oxyethyliertes Phenolacrylat, N-Butylacryloxo/oxyethylcarbonat, Octyl- bzw. Decylacrylatgemische, Isobornylacrylat, oder ein difunktionelles Acrylat, wie Dipropylenglycoldiacrylat, Polyethylenglycoldiacrylat, diacrylfunktionelles Bisphenol-A-Derivat, Hexandioldiacrylat, Tripropylenglycoldiacrylat, oder ein trifunktionelles Acrylat, wie Polyetheracrylat, ethoxyliertes Trimethylolpropantriacrylat, acrylierte trifunktionelle Harze, oder ein oligomeres Triacrylat/glycerol-Derivat, Trimethylolpropantriacrylat, oder ein tetrafunktionelles oder hexafunktionelles Produkt, wie Dipentaerythritolhexaacrylat, Polyethertetraacrylat, Ditrimethylolpropantetraacrylat, Gemische aus Pentaerythritoltri- und - tetraacrylaten, oder ein Polyesteracrylat, wie aminmodifizierte Polyetheracrylate, hexafunktionelle Polyesteracrylate, tetrafunktionelle Polyesteracrylate, oder ein verdünntes Polyesterharz, wie chlorierte Polyesterharze, oder ein Epoxyacrylat, wie Bisphenol-A-epoxyacrylate, epoxidierte Sojabohnenölacrylate, aminofunktionelle Bisphenol-A-epoxyacrylate, Fettsäure-modifizierte Epoxyacrylate, oder eine diacrylierte Verbindung, wie Epoxydiacrylate, aromatische difunktionelle Urethanacrylate, aliphatische difunktionelle Urethanacrylate, gelöste bzw. wasserlösliche aromatische bzw. aliphatische Urethanacrylate, oder eine triacrylierte Verbindung, wie aliphatische bzw. aromatische trifunktionelle Urethanacrylate, oder ein hexaacryliertes Produkt, wie aromatische bzw. aliphatische hexafunktionelle Urethanacrylate, oder beispielsweise ein Ebecryl^{®}-Produkt von UCB, oder ein Lackharze - wie es dem Buch "Lackharze Chemie, Eigenschaften und Anwendungen", D. Stoye, W. Freitag, Carl Hanser-Verlag (1996), insbesondere Epoxidverbindungen, -harze bzw. Handelsprodukte aus den Seiten 247 bis 251, zu entnehmen ist.

Erfindungsgemäße Beschichtungszusammensetzungen können ferner als Komponente (ii) vorzugsweise Tetramethoxysilan, Tetraethoxysilan, Tetrapropoxysilan, wie DYNASIL® M, A, P, oder Ethylsilikat mit einem mittleren Oligomerisierungsgrad von 2 bis 5, wie DYNASIL® 40, oder ein Methylsilicat oder ein Methylpolysilicat mit einem mittleren Polymerisierungsgrad 2 bis 10, wie "Methyl Silicate 56" der Firma Tama Chemicals Co. Ltd., oder ein Mischalkoholat entsprechender Silicium- und Aluminiumverbindungen, wie z. B. DYNASIL® SI-AI, Aluminiumalkoholate, beispielsweise Aluminiumtriisopropylat sowie -tributylat, oder Alkoholate anderer Metalle, beispielsweise von Titan oder Zirkon, wie Ethyltitanat, n-Propyltitanat, Isopropyltitanat, n-Butyltitanat, n-Butylzirkonat, um nur einige Beispiele zu nennen, enthalten. Solche Produkte sind beispielsweise unter den Marken DOROX^{®} (Sasol) oder TYZOR^{®} (DuPont) im Markt erhältlich.

Weiterhin enthält eine erfindungsgemäße Zubereitung als Komponente (iii) vorzugsweise mindestens ein Aminoalkylsilan der allgemeinen Formel I

R₂N[(CH₂)ₓRN]ₙ(CH₂)_{y}SiR¹ₘ(R²)(₃₋ₘ) (I),

worin die Gruppen R gleich oder verschieden sind und R für einen Wasserstoff oder eine lineare oder verzweigte Alkylgruppe mit 1 bis 4 C-Atomen oder eine Aminoalkylgruppe der Form R₂N(CH₂)ₓ- steht, R¹ eine lineare, cyclische oder verzweigte Alkylgruppe mit 1 bis 8 C-Atomen und R² eine Alkoxygruppe oder Acetoxygruppe darstellen, x eine ganze Zahl von 1 bis 4, y eine ganze Zahl von 1 bis 16 sowie n gleich 0 oder 1 oder 2 oder 3 und m gleich 0 oder 1 oder 2 sind.

Besonders bevorzugt verwendet man in einer erfindungsgemäßen Zubereitung als Komponente (iii) mindestens ein Aminoalkylalkoxysilan aus Reihe 3-Aminopropyltrimethoxysilan (AMMO), 3-Aminopropyltriethoxysilan (AMEO), 3-Aminopropylmethyldimethoxysilan, 3-Aminopropylmethyldiethoxysilan, N-(2-Aminoethyl)-3-aminopropyltrimethoxysilan (DAMO), N-(2-Aminoethyl)-3-aminopropyltriethoxysilan, N-(2-Aminoethyl)-3-aminopropylmethyldimethoxysilan, N-(2-Aminoethyl)-3-aminopropylmethyldiethoxysilan, N,N-Di(2-Aminoethyl)-3-aminopropyltrimethoxysilan, N,N-Di(2-Aminoethyl)-3-aminopropyltriethoxysilan, N,N-Di(2-Aminoethyl)-3-aminopropylmethyldimethoxysilan, N,N-Di(2-Aminoethyl)-3-aminopropylmethyldiethoxysilan, N-(2-Aminoethyl)-N'-(2-aminoethyl)-3-aminopropyltrimethoxysilan, N-(2-Aminoethyl)-N'-(2-aminoethyl)-3-aminopropyltriethoxysilan, N-(2-Aminoethyl)-N'-(2-aminoethyl)-3-aminopropylmethyldimethoxysilan, N-(2-Aminoethyl)-N'-(2-aminoethyl)-3-aminopropylmethyldiethoxysilan, Bis-(Triethoxysilylpropyl)-amin, Bis-(Tri-methoxysilylpropyl)-amin, N-(2-Aminobutyl)-3-aminopropyltriethoxysilan, N-(2-Aminobutyl)-3-aminopropyltrimethoxysilan oder Mischungen daraus oder entsprechende Produkte, die anstelle der jeweiligen Propylgruppe eine andere Alkylgruppe tragen.

Weiterhin sind als Komponente (iii) Kondensate oder Cokondensate zuvor genannter Aminosilane geeignet. Dabei können die Kondensate oder Cokondensate auch als partielle Hydrolysate eingesetzt werden, beispielsweise DYNASYLAN^{®} 1146 und 1148. Bevorzugt setzt man solche Kondensate oder Cokondensate in hoch konzentrierter Form oder als alkoholische Lösung ein. So setzt man beispielsweise im Falle eines Ethoxygruppen enthaltenden Kondensats geeigneterweise eine ethanolhaltige Lösung ein. Zur Verbesserung der Beschichtungseigenschaften, z. B. Haftung, Trocknungsdauer etc., können aber auch andere organische Lösungsmittel eingesetzt werden, beispielsweise Glykole, wie Butylglykol, Alkohole, wie Methanol, Isopropanol, Butanol, Acetate, wie Butylacetat, Ketone, wie Methylethylketon, um nur einige zu nennen.

Auch kann man Cokondensate, die aus einem Aminosilan, vgl. Formel I, und mindestens einem anderen Organosilan, beispielsweise solcher gemäß Formel II, und/oder einem Tetraalkoxysilan erhältlich sind, verwenden. Solche Kondensate oder Cokondensate sind beispielsweise aus der deutschen Patentanmeldung 101 51 264.3 zu entnehmen.

Es wird ausdrücklich darauf hingewiesen, dass die hier und nachfolgend zitierten Schutzrechte bzw. Literaturstellen dem Offenbarungsgehalt der vorliegenden Patentanmeldung zuzurechnen sind.

Ferner enthalten erfindungsgemäße Zubereitungen als Komponente (iv) bevorzugt mindestens ein Organosilan der allgemeinen Formel 11

R⁴SiR⁵ᵣ(R⁶)₍₃₋ᵣ₎ (II),

worin R⁴ für einen Wasserstoff oder eine lineare, verzweigte oder cyclische Alkylgruppe mit 1 bis 18 C-Atomen oder eine Perfluoralkylgruppe mit 1 bis 16 C-Atomen oder eine Fluoralkylgruppe der Form F₃C(CF₂)ₚ(CH₂)₂- mit p gleich 0 bis 14 oder eine Alkylgruppe mit einem epoxyfunktionellen Rest, wie z. B. in DYNASYLAN® GLYMO, einem 3-Glycidyloxypropyltrimethoxysilan, steht, R⁵ eine lineare, cyclische oder verzweigte Alkylgruppe mit 1 bis 12 C-Atomen und R⁶ eine Alkoxygruppe oder eine entsprechende aromatische Gruppe, wie z. B. eine Phenoxygruppe oder ein ankondensiertes Bisphenol A, darstellen und r gleich 0 oder 1 oder 2 ist.

Insbesondere können solche erfindungsgemäß lufttrocknenden Beschichtungszusammensetzungen als Komponente (iv) mindestens ein Organosilan aus der Reihe Methyltrimethoxysilan, Methyltriethoxysilan (MTES), n-Propyltrimethoxysilan (PTMO), n-Propyltriethoxysilan (PTEO), n-Octyltrimethoxysilan, n-Octyltriethoxysilan (OCTEO), i-Octyltrimethoxysilan, i-Octyltriethoxysilan, Hexadecyltrimethoxysilan, Hexadecyltriethoxysilan, Octadecyltrimethoxysilan, Octadecyltriethoxysilan, Tridecafluor-1,1,2,2-tetrahydrooctyltrimethoxysilan, Tridecafluor-1,1,2,2-tetrahydrooctyltriethoxysilan, 3-Glycidyloxypropyltrimethoxysilan (GLYMO), 3-Glycidyloxypropyltriethoxysilan (GLYEO) oder Mischungen daraus enthalten.

Besonders bevorzugt enthalten vorliegende Zubereitungen als Komponente (iii) Kondensate oder Cokondensate aus mindestens einem Aminoalkylalkoxysilan, mindestens einem Organoalkoxysilan und gegebenenfalls einem Kieselsäureester. Ganz besonders geeignet sind Cokondensate, die aus mindestens einem Aminoalkylalkoxysilan und einem Fluoralkylalkoxysilan erhältlich sind, beispielsweise Wirkstoffe, wie sie in DYNASYLAN® F 8800, F 8810 oder F 8815 enthalten sind, vgl. EP 0 846 716 B1, EP 0 960 921 A2, EP 1 101 787 A2.

Geeigneterweise beträgt der Anteil an Si-gebundenen Fluoralkylfunktionen in erfindungsgemäßen Zubereitungen 0,001 bis 5 Gew.-%, bezogen auf die Beschichtungszusammensetzung.

Insbesondere kann eine erfindungsgemäße Zubereitung 0,05 bis 3 Gew.-% an Fluoralkylalkoxysilan, beispielsweise DYNASYLAN^{®} F 8161 und F 8261, oder ein oligomeres Cokondensat, beispielsweise DYNASYLAN^{®} 8800, bezogen auf die Beschichtungszusammensetzung, oder alkoholische Lösungen der Fluoralkylalkoxysilane, z. B. DYNASYLAN^{®} F 8262 und F 8263, vgl. EP 1 033 395 A2, enthalten.

Man kann aber auch Kondensate, die aus einem Organoalkoxysilan erhältlich sind, als Komponente (iv) einsetzen, vgl. EP 0 814 110 B1. Weiterhin kann man Cokondensate, wie sie beispielsweise EP 0 518 057 B1 zu entnehmen sind, einsetzen.

Erfindungsgemäße Zubereitungen können als weitere Komponente (v) mindestens eine Komponente aus der Reihe Lösemittel, vorzugsweise 0 bis 30 Gew.-%, wie z. B. Glykole, Glycerin oder β-Diketonate, Acetylacetonate, Ketone, Alkohole, Acetate, Lösevermittler, Verdünnungsmittel, Rheologiehilfsmittel, anorganische Mikropartikel oder Nanopartikel, bevorzugt 0 bis 30 Gew.-%, wie z. B. pyrogene Kieselsäure, z. B. Aerosil, Böhmit, Korund, Aluminiumoxide, gefällte Kieselsäure, Mattierungsmittel, Pigmente, wie z. B. TiO₂ oder Ruß, bevorzugt 0 bis 5 Gew.-%, Farbstoff, Netzhilfsmittel, Dispergiermittel, Filmbilder, beispielsweise Tenside, Disperbyk^{®} (Byk Chemie), TEGO^{®} Dispers 610 S, TEGO^{®}WET 270, vgl. auch www.TEGO.de, Hydrolysekatalysatoren oder Kondensationskatalysatoren, vorzugsweise 0 bis 2 Gew.-%, wie z. B. NH₄F, NaF, organische und anorganische Säuren, z. B. Ameisensäure, Essigsäure oder HCl, organische Zinnverbindungen, Aluminium-sec.-butylat, Titan- und Zirkonethylate oder -propylate, Titan-, Aluminium- und Zirkonacetonate, Entschäumer, wie z. B. Silicone, u. a. Foamex^{®} (Tego Chemie), UV-Stabilisatoren, bevorzugt 0 bis 3 Gew.-%, wie z. B. 2-Hydroxybenzophenone oder Hydroxyphenyltriazine, enthalten.

Geeigneterweise enthält eine erfindungsgemäße Beschichtungszusammensetzung in Summe 0 bis 50 Gew.-%, vorzugsweise 0,1 bis 40 Gew.-%, besonders bevorzugt 0,5 bis 30 Gew.-%, an Komponenten (v), bezogen auf die Beschichtungszusammensetzung.

So kann eine erfindungsgemäße Zubereitung als Löse- bzw. Verdünnungsmittel insbesondere auch Methanol, Ethanol, i-Propanol oder n-Butanol enthalten. Auch als Lösevermittler sind beispielsweise Alkohole oder andere polare Lösungsmittel geeignet.

Zur Einstellung der rheologischen Eigenschaften erfindungsgemäßer Zubereitungen kann man beispielsweise gefällte und pyrogene Kieselsäure verwenden. So kann man beispielsweise durch Zusatz einer feinteiligen, oberflächenreichen Kieselsäure, wie Aerosil 200, oder anderen Rheologiehilfsstoffen zu einer erfindungsgemäßen Beschichtungszusammensetzung die Viskosität erhöhen bzw. gezielt einstellen. Auch kann man Pigmente, wie Titandioxid, gefällte bzw. pyrogene Kieselsäure, Talkum, Glimmer, oder Farbstoffe, wie Ultramarinblau, als farbgebende Komponente (v) zusetzen.

Darüber hinaus kann zur weiteren Verbesserung der Abrieb- und Kratzfesteigenschaften erfindungsgemäßer Beschichtungen das erfindungsgemäße lufttrocknende Beschichtungsmittel als eine der Komponenten (v) Schmelzkorund als auch gesinterter Korund mit einer mittleren Teilchengröße von 2 bis 40 µm, vorzugsweise 5 bis 20 µm, und/oder pyrogene Kieselsäure mit einer mittleren Teilchengröße von 2 bis 200 nm, vorzugsweise 5 bis 50 nm, beispielsweise Aerosil^{®} OX-50, Aerosil^{®} 200, enthalten, wobei die mikro- bzw. nanoskaligen Partikel mit aminoalkyl-, alkenyl-, epoxyalkyl-, methacryloxyalkyl-, hydroxy-, alkoxy-, acryl-, alkyl- und/oder fluoralkylfunktionellen Silanen bzw. Siloxanen umhüllt sein können, so wie insbesondere aus den deutschen Patentanmeldungen 101 00 631, 101 00 633, 101 41 688 und 101 41 690 zu entnehmen ist.

Geeigneterweise beträgt der Anteil nano- und/oder mikroskaliger Partikel in erfindungsgemäßen Zusammensetzungen, insbesondere für Abrieb- bzw. Kratzfestanwendungen, 0,01 bis 30 Gew.-%, vorzugsweise 0,5 bis 15 Gew.-%, besonders bevorzugt 5 bis 10 Gew.-%, bezogen auf die Beschichtungszusammensetzung.

Insbesondere kann man einem erfindungsgemäßen Beschichtungsmittel einen Hydrolyse- oder Kondensationskatalysator zusetzen.

So kann man als Katalysatorsystem beispielsweise Dibutylzinnlaurat (DBTL), Ammoniuimfluorid, Natriumfluorid, anorganische sowie organische Säuren, wie Acrylsäure, Ameisensäure, Essigsäure, Aluminiumalkoxide, Titanalkoxide, Zirkonalkoxide sowie Chelate der Elemente Aluminium, Titan oder Zirkon verwenden.

Erfindungsgemäße Zubereitungen sind in der Regel niedrigviskos und weisen bevorzugt eine Viskosität [gemessen nach Ubbelohde bei T = 20 °C] von weniger als 3 500 mPa s, vorzugsweise 1 bis 3 000 mPa s, besonders bevorzugt 50 bis 2 500 mPa s, ganz besonders bevorzugt 100 bis 2 000 mPa s, insbesondere 250 bis 1 000 mPa s, auf.

Im Allgemeinen stellt man eine erfindungsgemäße Zusammensetzung derart her, dass man die Komponenten (i), (ii), (iv) sowie (v), sofern diese als Einsatzstoffe in Frage kommen, vorlegt und anschließend in der Regel unter guter Durchmischung die Komponente (iii) zugibt. Danach können die Nano- und Mikropartikel eindispergiert werden.

Es ist allerdings auch möglich, die Nano- und Mikropartikel bereits in die Komponente (i) einzudispergieren und danach wie zuvor beschrieben zu verfahren.

Eine andere Variante ist das Zugeben der Komponente (iii) zur Komponente (i) und dann die Zugabe der Komponenten (ii), (iv) sowie (v).

Das Mischen der Komponenten erfolgt in der Regel durch einfaches Rühren. Feststoffe, Nanopartikel und/oder Mikropartikel-haltige Lacksysteme oder entsprechende Pasten, sollten in die Mischung eindispergiert werden. Das Dispergieren erfolgt beispielsweise mittels eines Dissolvers, ist aber auch mit einer Perlmühle möglich oder anderen Dispersionsapparaturen, z. B. mittels Torrusmill^{®}.

Eine erfindungsgemäße Beschichtungszusammensetzung kann man beispielsweise durch Streichen, Spritzen, Rakeln, Tauchen oder Walzen auf ein Substrat aufbringen. Die Viskosität des erfindungsgemäßen Beschichtungsstoffs muss an die einzelnen Auftragsformen angepasst werden. Zum Beispiel sollte die Viskosität für den Walzenauftrag mehr als 100 mPa s betragen. Dies kann gegebenenfalls durch die Zugabe von Rheologiehilfsmitteln erzielt werden.

Somit ist auch Gegenstand der vorliegenden Erfindung die Verwendung einer erfindungsgemäßen Zubereitung für die Erzeugung einer Beschichtung auf einem Substrat.

Als Substrat kann man erfindungsgemäß beispielsweise Glas, Holz, Kunststoff, wie z. B. PVC, Polycarbonat, Polyurethan, Polymethacrylat (Plexiglas^{®}) oder Polystyrol, Metall, insbesondere Aluminium, Metalllegierungen, Stahl, Stein, Kunststein, Keramik oder Beton in vorteilhafter Weise beschichten.

Weiterhin sind Gegenstand der vorliegenden Erfindung Beschichtungen, die unter Verwendung einer erfindungsgemäßen Zubereitung erhältlich sind.

Ebenfalls sind Gegenstand der Erfindung Artikel oder Gegenstände mit einer solchen erfindungsgemäßen Beschichtung.
Erfindungsgemäße Beschichtungen, die auf einer Applikation erfindungsgemäßer Beschichtungsmittel beruhen, wobei die erfindungsgemäßen Zubereitungen fluoralkylfunktionelle Silane bzw. Siloxane enthalten, zeichnen sich bevorzugt auch durch Wasser, Öl, Tinte, Farbe, Lack, Schmutz sowie Staub abweisende Eigenschaften aus. Daher kann man solche Systeme vorteilhaft für Antigraffitianwendungen sowie zum Korrosionsschutz von Metalloberflächen verwenden.

Die vorliegende Erfindung wird durch die nachfolgenden Beispiele näher erläutert.

### Beispiele

| Einsatzstoffe: | |
|---|---|
| Sartomer^{®} 494: | Tetrafunktionelles Acrylat |
| ARALDIT^{®} GY 260: | Epoxidharz auf Basis Bisphenol A |
| Ebecryl^{®} 220: | Hexafunktionelles aromatisches Urethanacrylat, MW -1000 g/mol |
| Uvacure^{®} 1500: | Cycloaliphatisches Epoxidharz, Epoxyäquivalent: 134 g/Epoxygruppe |
| DYNASIL^{®} A: | Tetraethoxysilan |
| DYNASYLAN^{®} AMEO: | 3-Aminopropyltriethoxysilan |
| DYNASYLAN^{®} DAMO: | N-Aminoethyl-3-aminopropyltrimethoxysilan |
| DYNASYLAN^{®} F 8261: | Tridecafluor-1,1,2,2-tetrahydrooctyltriethoxysilan |
| DYNASYLAN^{®} F 8800: | Aminoalkyl-/fluoralkylfunktionelles Siloxan |

### Hinweis:

Alle nachfolgend als Beispiele aufgeführten Lacke sind mindestens 8 Monate bei 50 °C lagerstabil.

### Beispiel 1

### Lufttrocknender Lack auf Epoxidharzbasis

ARALDIT^{®} GY 260 (25,0 g), Ethanol (25,0 g) und DYNASIL^{®} A (50 g) wurden bei Raumtemperatur vorgelegt. Es entstand eine farblose, klare Lösung über dem noch ungelösten ARALDIT^{®} GY 260. Die Lösung wurde ca. 30 Minuten bei Raumtemperatur gerührt bis das ARALDIT^{®} GY 260 gelöst war. Anschließend wurde DYANSYLAN^{®} AMEO (112,5 g) mittels Tropftrichter zügig (ca. 125 ml in 6 Minuten) zudosiert. Die Lösung blieb farblos, klar, und die Temperatur erhöhte sich um ca. 6 °C. Nun wurde nochmals 2 Stunden bei Raumtemperatur gerührt.

Ein klares niederviskoses (6,9 mPa s, DIN 53 015, 20 °C) Produkt entstand.

### Beispiel 1a

Die Herstellung des Lacks wurde wie in Beispiel 1 ausgeführt, nur die Harzmenge wird auf 50 g verdoppelt. Die anderen Einsatzmengen blieben gleich.

Der Lack wurde auf Metallprüfblechen (Aluminium) mit Hilfe einer Rakel aufgeraktelt. Die Nassschichtdicke betrug 12 µm. Die Beschichtung war nach 45 Minuten bei 22°C und 45 % relativer Luftfeuchtigkeit staubtrocken. Es bildete sich eine glatte, farblose, klare Schicht auf der Oberfläche. Die Schicht hatte eine Bleistifthärte (Ritzhärte ISO 15184) nach 7 Tagen von 3H. Der Gitterschnitt (nach DIN 53 151) war Gt0. Die Trockenschichtdicke nach 48 Stunden betrug 3,3 µm.

Die Schicht wurde auf Wasserbeständigkeit geprüft, indem sie 2 Tage in Wasser eingelagert wurde. Hiernach betrug der Gitterschnitt ebenfalls Gt0. Ein verschärfter Gitterschnitt mit Tesa-Abriss wurde auch mit Gt0 beurteilt.

### Beispiel 1b

Die Herstellung des Lacks wurde wie in Beispiel 1 ausgeführt, nur ARALDIT^{®} wurde gegen Uvacure^{®} 1500 ausgetauscht. Die anderen Einsatzstoffe blieben gleich. Alle Einsatzmengen blieben gleich.

Der Lack wurde auf Metallprüfblechen (Aluminium) mit Hilfe einer Rakel aufgeraktelt. Die Prüfbleche wurden vorher mit Ethylacetat behandelt. Die Nassschichtdicke betrug 12 µm. Die Beschichtung war nach 60 Minuten bei 22 °C und 35 % relativer Luftfeuchtigkeit staubtrocken. Es bildete sich eine glatte, farblose, klare Schicht auf der Oberfläche. Die Schicht hatte eine Bleistifthärte (Ritzhärte ISO 15184) nach 7 Tagen von 4H. Der Gitterschnitt (nach DIN 53 151) war Gt0. Ein verschärfter Gitterschnitt mit Tesa-Abriss wurde auch mit Gt0 beurteilt. Die Trockenschichtdicke nach 48 Stunden war 3,3 µm.

Die Schicht wurde auf Wasserbeständigkeit geprüft, indem sie 2 Tage in Wasser eingelagert wurde. Hiernach betrug der Gitterschnitt ebenfalls Gt0. Ein verschärfter Gitterschnitt mit Tesa-Abriss wurde auch mit Gt0 beurteilt.

### Beispiel 2

### Lufttrocknender Lack auf Acrylatharzbasis

Ebecryl^{®} 220 (25,0 g), Ethanol (25,0 g) und DYNASIL^{®} A (50 g) wurden bei Raumtemperatur vorgelegt. Es entstand eine trübe, weiße Flüssigkeit. Die Lösung wurde ca. 30 Minuten bei Raumtemperatur gerührt. Anschließend wurde DYNASYLAN^{®} AMEO (112,5 g) mittels Tropftrichter zügig (ca. 125 ml in 8 Minuten) zudosiert. Die Flüssigkeit wurde während der Zugabe klar und hell-lachsfarben, die Temperatur erhöhte sich um ca. 23 °C. Nun wurde nochmals 2 Stunden bei Raumtemperatur gerührt. Die Lösung wurde dunkler bis rosafarben.

Das Verhältnis von NH₂-Gruppen zu Acrylgruppen betrug 3,4 : 1.

Ein klares leicht rosafarbenes niederviskoses (8,7 mPa s) Produkt entstand.

### Beispiel 2a

### Ein weiteres Beispiel auf Basis Acrylharz

Sartomer^{®} 494 (4,8 g), Ethanol (42,1 g), 0,2 g Acrylsäure, 0,2 g Wasser und DYNASIL^{®} A (9,6 g) wurden bei Raumtemperatur vorgelegt. Es entstand eine etwas trübe Flüssigkeit. Die Lösung wurde noch ca. 30 Minuten bei Raumtemperatur gerührt. Anschließend wurde DYNASYLAN^{®} DAMO (43,1 g) mittels Tropftrichter zügig zugegeben. Die Temperatur erhöhte sich um ca. 21°C. Nun wurde nochmals 2 Stunden bei Raumtemperatur gerührt.

Das Verhältnis von NH₂-Gruppen zu Acrylgruppen betrug 5,4:1.

### Beispiel 3

### Lufttrocknender Lack auf der Basis von Epoxidharz und Fluorsilan

Ebecryl^{®} 220 (25,0 g), Ethanol (25,0 g), DYNASYLAN^{®} F 8261 (6,38 g) und DYNASIL^{®} A (50 g) wurden bei Raumtemperatur vorgelegt. Es entstand eine trübe, weiße Flüssigkeit. Die Lösung wurde ca. 30 Minuten bei Raumtemperatur gerührt. Anschließend wurde DYNASYLAN^{®} AMEO (112,5 g) mittels Tropftrichter zügig (ca. 125 ml in 8 Minuten) zudosiert. Die Flüssigkeit wurde während der Zugabe klar und hell-lachsfarben, die Temperatur erhöhte sich um ca. 23 °C. Nun wurde nochmals 2 Stunden bei Raumtemperatur gerührt. Die Lösung wurde dunkler bis rosafarben.

### Beispiel 3a

Die Herstellung erfolgte wie in Beispiel 3, nur DYNASYLAN^{®} F 8261 wurde gegen DYNASYLAN^{®} F 8800 ausgetauscht.

Der Lack hatte eine Viskosität (DIN 53 015/20 °C) von 6,9 mPa s und einen Feststoffgehalt von 45,9 % (DIN EN ISO 3251).

Der so hergestellte Lack wurde auf Aluminiumbleche aufgetragen und ergab eine klare, glatte Oberfläche. Der Lack war nach 45 Minuten staubtrocken und hatte nach 7 Tagen eine Härte (Ritzhärte ISO 15184) von 6H.

Auf den ausgehärteten Lack wurden zur Überprüfung der Anti-Graffiti-Wirkung mehrere Farben aufgetragen. Die Verschmutzungen konnten relativ einfach wider entfernt werden. Die Resultate sind in der Tabelle zusammengefasst.

**Tabelle**

| Farbe | Tesa-Test | Entfernt Verunreinigung |
|---|---|---|
| Acryllack dupli-color RAL 3000 | Entfernt den Lack komplett . | Krautol Uni-Abbeizer |
| Sprühlack Hagebau fuchsiapink | Entfernt den Lack komplett | Krautol Uni-Abbeizer |
| Aqua-Buntsprühlack toom blau | Entfernt den Lack komplett | Krautol Uni-Abbeizer |
| Molotow Bitumenfarbe | konnte nicht entfernt werden | Krautol Uni-Abbeizer |
| Edding 800 | konnte nicht entfernt werden | Ethanol |
| On the run marker | konnte nicht entfernt werden | Ethanol |
| Spezialtinte SNCF | konnte nicht entfernt werden | Ethanol |

Der Tesa-Abriss-Test bestand darin, dass ein Tesastreifen auf die Farbe aufgeklebt wurde und dann wieder abgezogen wurde. Wenn der Tesastreifen die komplette Farbe mitnahm, dann war der Test bestanden. Es zeigte sich also, dass eine ganze Reihe von Farben auf diesem erfindungsgemäße Lack keine Haftung haben und mit dem Tesa wieder entfernt werden konnte.

## Patentansprüche

1. Wasserfreie Zubereitung als eine an der Luft härtende Beschichtungszusammensetzung, die
(i) mindestens ein Epoxidharz oder mindestens ein Acrylharz oder mindestens ein Acrylharzmonomer oder mindestens ein Copolymerisat, das auf einem Acryl- oder Epoxidmonomer basiert, oder ein Gemisch aus zuvor genannten Einsatzstoffen,
(ii) einen Kieselsäureester und/oder mindestens ein Alkylsilikat,
(iii) mindestens ein Aminoalkylsilan, ein Gemisch aus Aminoalkylsilanen oder Kondensate oder Cokondensate daraus und
(iv) gegebenenfalls ein Organosilan, ein Gemisch aus Organosilanen oder Kondensate oder Cokondensate
enthält,
wobei im Falle einer acrylathaltigen Beschichtungszusammensetzung das molare Verhältnis der Aminogruppen des Aminoalkylsilans zu den funktionellen Acrylatgruppen des Acrylharzes weniger als 7 : 1 beträgt.

2. Zubereitung nach Anspruch 1,
**gekennzeichnet durch** einen Gehalt von
2,5 bis 50 Gew.-% der Komponente (i),
0,5 bis 60 Gew.-% der Komponente (ii),
15 bis 90 Gew.-% der Komponente (iii),
0 bis 60 Gew.-% der Komponente (iv) und
0 bis 50 Gew.-% einer weiteren oder mehrerer weiterer Komponenten (v), wobei die Anteile der Komponenten in Summe maximal 100 Gew.-% ergeben.

3. Zubereitung nach Anspruch 1 oder 2,
**dadurch gekennzeichnet,**
**dass** diese als Komponente (i) mindestens ein aromatisches Epoxidharz oder ein aliphatisches Epoxidharz oder ein Acrylharzmonomer oder ein Copolymerisat der Reihe aliphatisches Urethanacrylat, aromatisches Urethanacrylat, aliphatisches Epoxidacrylat, aromatisches Epoxyacrylat oder Polyesteracrylat enthält.

4. Zubereitung nach einem der Ansprüche 1 bis 3,
**dadurch gekennzeichnet,**
**dass** diese als Komponente (ii) Tetramethoxysilan, Tetraethoxysilan, Tetrapropoxysilan oder ein Ethylsilikat mit einem mittleren Oligomerisierungsgrad von 2 bis 5 oder ein Methylsilicat oder ein Methylpolysilicat mit einem mittleren Polymerisierungsgrad 2 bis 10 oder ein Mischalkoholat von Silicium und Aluminium enthält.

5. Zubereitung nach einem der Ansprüche 1 bis 4,
**dadurch gekennzeichnet,**
**dass** diese als Komponente (iii) ein Aminoalkylsilan der allgemeinen Formel
R₂N[(CH₂)ₓRN]ₙ(CH₂)_{y}SiR¹ₘ(R²)₍₃₋ₘ₎ (I),
worin die Gruppen R gleich oder verschieden sind und R für einen Wasserstoff oder eine lineare oder verzweigte Alkylgruppe mit 1 bis 4 C-Atomen oder eine Aminoalkylgruppe der Form R₂N(CH₂)ₓ- steht, R¹ eine lineare, cyclische oder verzweigte Alkylgruppe mit 1 bis 8 C-Atomen und R² eine Alkoxygruppe oder Acetoxygruppe darstellen, x eine ganze Zahl von 1 bis 4, y eine ganze Zahl von 1 bis 16 sowie n gleich 0 oder 1 oder 2 oder 3 und m gleich 0 oder 1 oder 2 sind,
enthält.

6. Zubereitung nach Anspruch 5,
**dadurch gekennzeichnet,**
**dass** die lufttrocknende Beschichtungszusammensetzung als Komponente (iii) mindestens ein Aminoalkylalkoxysilan aus Reihe 3-Aminopropyltrimethoxysilan, 3-Aminopropyltriethoxysilan, 3-Aminopropylmethyldimethoxysilan, 3-Aminopropylmethyldiethoxysilan, N-(2-Aminoethyl)-3-aminopropyltrimethoxysilan, N-(2-Aminoethyl)-3-aminopropyltriethoxysilan, N-(2-Aminoethyl)-3-aminopropylmethyldimethoxysilan, N-(2-Aminoethyl)-3-aminopropylmethyldiethoxysilan, N,N-Di(2-Aminoethyl)-3-aminopropyltrimethoxysilan, N,N-Di(2-Aminoethyl)-3-aminopropyltriethoxysilan, N,N-Di(2-Aminoethyl)-3-aminopropylmethyldimethoxysilan, N,N-Di(2-Aminoethyl)-3-aminopropylmethyldiethoxysilan, N-(2-Aminoethyl)-N'-(2-aminoethyl)-3-aminopropyltrimethoxysilan, N-(2-Aminoethyl)-N'-(2-aminoethyl)-3-aminopropyltriethoxysilan, N-(2-Aminoethyl)-N'-(2-aminoethyl)-3-aminopropylmethyldimethoxysilan, N-(2-Aminoethyl)-N'-(2-aminoethyl)-3-aminopropylmethyldiethoxysilan, Bis-(Triethoxysilylpropyl)-amin, Bis-(Trimethoxysilylpropyl)-amin, N-(2-Aminobutyl)-3-aminopropyltriethoxysilan, N-(2-Aminobutyl)-3-aminopropyltrimethoxysilan oder Mischungen daraus enthält.

7. Zubereitung nach einem der Ansprüche 1 bis 6,
**dadurch gekennzeichnet,**
**dass** diese als Komponente (iv) mindestens ein Organosilan der allgemeinen Formel II
R⁴SiR⁵(R⁶)₍₃₋ᵣ₎ (II),
worin R⁴ für einen Wasserstoff oder eine lineare, verzweigte oder cyclische Alkylgruppe mit 1 bis 18 C-Atomen oder eine Perfluoralkylgruppe mit 1 bis 16 C-Atomen oder eine Fluoralkylgruppe der Form F₃C(CF₂)ₚ(CH₂)₂- mit p gleich 0 bis 14 oder eine Alkylgruppe mit einem epoxyfunktionellen Rest steht, R⁵ eine lineare, cyclische oder verzweigte Alkylgruppe mit 1 bis 12 C-Atomen und R⁶ eine Alkoxygruppe oder eine Aroxygruppe darstellen und r gleich 0 oder 1 oder 2 ist,
enthält.

8. Zubereitung nach Anspruch 7,
**dadurch gekennzeichnet,**
**dass** die Beschichtungszusammensetzung als Komponente (iv) mindestens ein Organosilan aus der Reihe Methyltrimethoxysilan, Methyltriethoxysilan, n-Propyltrimethoxysilan, n-Propyltriethoxysilan, n-Octyltrimethoxysilan, n-Octyltriethoxysilan, i-Octyltrimethoxysilan, i-Octyltriethoxysilan, Hexadecyltrimethoxysilan, Hexadecyltriethoxysilan, Octadecyltrimethoxysilan, Octadecyltriethoxysilan, Tridecafluor-1,1,2,2-tetrahydrooctyltrimethoxysilan, Tridecafluor-1,1,2,2-tetrahydrooctyltriethoxysilan, 3-Glycidyloxypropyltrimethoxysilan, 3-Glycidyloxypropyltriethoxysilan oder Mischungen daraus enthält.

9. Zubereitung nach einem der Ansprüche 1 bis 8,
**dadurch gekennzeichnet,**
**dass** diese als Komponente (iii) Kondensate oder Cokondensate aus mindestens einem Aminoalkylalkoxysilan, mindestens einem Organoalkoxysilan und gegebenenfalls einem Kieselsäureester enthält.

10. Zubereitung nach Anspruch 9,
**dadurch gekennzeichnet,**
**dass** das Cokondensat aus mindestens einem Aminoalkylalkoxysilan und einem Fluoralkylalkoxysilan erhältlich ist.

11. Zubereitung nach einem der Ansprüche 1 bis 10,
**dadurch gekennzeichnet,**
**dass** der Anteil an Si-gebundenen Fluoralkylfunktionen 0,001 bis 5 Gew.-%, bezogen auf die Beschichtungszusammensetzung, beträgt.

12. Zubereitung nach einem der Ansprüche 1 bis 11,
**dadurch gekennzeichnet,**
**dass** die Beschichtungszusammensetzung als weitere Komponente (v) mindestens eine Komponente aus der Reihe Lösemittel, Lösevermittler, Verdünnungsmittel, Rheologiehilfsmittel, anorganische Mikropartikel oder Nanopartikel, Mattierungsmittel, Pigmente, Farbstoff, Netzhilfsmittel, Tenside, Dispergiermittel, Hydrolysekatalysatoren, Kondensationskatalysatoren, Entschäumer, Filmbildner und UV-Stabilisatoren enthält.

13. Zubereitung nach einem der Ansprüche 1 bis 12,
**dadurch gekennzeichnet,**
**dass** diese als Komponente (v) Korund mit einer mittleren Teilchengröße von 2 bis 40 µm und/oder pyrogene Kieselsäure mit einer mittleren Teilchengröße von 2 bis 200 nm enthält, wobei die mikro- bzw. nanoskaligen Partikel mit aminoalkyl-, alkenyl-, epoxyalkyl-, methacryloxyalkyl-, hydroxy-, alkoxy-, acryl-, alkyl- und/oder fluoralkylfunktionellen Silanen bzw. Siloxanen umhüllt sein können.

14. Zubereitung nach Anspruch 12 oder 13,
**dadurch gekennzeichnet,**
**dass** der Anteil nano- und/oder mikroskaliger Partikel 0 bis 30 Gew.-%, bezogen auf die Beschichtungszusammensetzung, beträgt.

15. Zubereitung nach einem der Ansprüche 1 bis 14,
**dadurch gekennzeichnet,**
**dass** die Beschichtungszusammensetzung eine Viskosität von weniger als 3 500 mPa s aufweist.

16. Verwendung einer Zubereitung nach einem der Ansprüche 1 bis 15 für die Erzeugung einer Beschichtung auf einem Substrat.

17. Verwendung einer Zubereitung gemäß einem der Ansprüche 1 bis 16 zum Beschichten von Glas, Holz, Kunststoff, Metall, Metalllegierungen, Stein, Kunststein, Keramik oder Beton.

18. Verwendung einer Zubereitung gemäß einem der Ansprüche 1 bis 16 zur Wasser, Öl, Tinte, Farbe, Lack, Schmutz und Staub abweisenden Ausstattung von Oberflächen.

19. Verwendung einer Zubereitung gemäß einem der Ansprüche 1 bis 18 für Antigraffitianwendungen.

20. Verwendung einer Zubereitung gemäß einem der Ansprüche 1 bis 19 für Korrosionsschutzanwendungen.

21. Verwendung einer Zubereitung gemäß einem der Ansprüche 1 bis 20 zur abriebfesten und/oder kratzfesten Ausstattung von Oberflächen.

22. Beschichtungen, die unter Verwendung einer Zubereitung gemäß einem der Ansprüche 1 bis 21 erhältlich sind.

23. Artikel oder Gegenstände mit einer Beschichtung gemäß Anspruch 22.

## Claims

1. Water-free formulation in the form of an air-curing coating composition comprising
(i) at least one epoxy resin or at least one acrylic resin or at least one acrylic resin monomer or at least one copolymer based on an acrylic monomer or epoxy monomer, or a mixture of the aforementioned components,
(ii) a silicic ester and/or at least one alkyl silicate,
(iii) at least one aminoalkylsilane, a mixture of aminoalkylsilanes or condensates or cocondensates thereof, and
(iv) if desired, an organosilane, a mixture of organosilanes or condensates or cocondensates,
the molar ratio of the amino groups of the aminoalkylsilane to the functional acrylate groups of the acrylic resin in the case of an acrylate-containing coating composition being less than 7:1.

2. Formulation according to Claim 1, **characterized in that** it contains
from 2.5 to 50% by weight of component (i),
from 0.5 to 60% by weight of component (ii),
from 15 to 90% by weight of component (iii),
from 0 to 60% by weight of component (iv), and
from 0 to 50% by weight of a further or a plurality of components (v),
the fractions of the components totaling not more than 100% by weight.

3. Formulation according to Claim 1 or 2, **characterized in that** it comprises as component (i) at least one aromatic epoxy resin or an aliphatic epoxy resin or an acrylic resin monomer or a copolymer from the group consisting of aliphatic urethane acrylate, aromatic urethane acrylate, aliphatic epoxy acrylate, aromatic epoxy acrylate, and polyester acrylate.

4. Formulation according to any of Claims 1 to 3, **characterized in that** it comprises as component (ii) tetramethoxysilane, tetraethoxysilane, tetrapropoxysilane or an ethyl silicate having an average degree of oligomerization of from 2 to 5 or a methyl silicate or a methyl polysilicate having an average degree of polymerization of from 2 to 10 or a mixed alkoxide of silicon and aluminum.

5. Formulation according to any of Claims 1 to 4, **characterized in that** it comprises as component (iii) an aminoalkylsilane of the general formula I
R₂N[(CH₂)ₓRN]ₙ(CH²)_{y}SiR¹ₘ(R²) (₃₋ₘ) (I)
in which the groups R are identical or different and R is a hydrogen or a linear or branched alkyl group having from 1 to 4 carbon atoms or an aminoalkyl group of the form R₂N (CH₂) ₓ-, R¹ is a linear, cyclic or branched alkyl group having from 1 to 8 carbon atoms and R² is an alkoxy group or acetoxy group, x is an integer from 1 to 4, y is an integer from 1 to 16, and n is 0 or 1 or 2 or 3 and m is 0 or 1 or 2.

6. Formulation according to Claim 5, **characterized in that** the air-drying coating composition comprises as component (iii) at least one aminoalkylalkoxysilane from the group consisting of 3-aminopropyltrimethoxysilane, 3-aminopropyltriethoxysilane, 3-aminopropylmethyldimethoxysilane, 3-aminopropylmethyldiethoxysilane, N-(2aminoethyl)-3-aminopropyltrimethoxysilane, N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, N,N-di(2-aminoethyl)-3-aminopropyltrimethoxysilane, N,N-di(2-aminoethyl)-3-aminopropyltriethoxysilane, N,N-di(2-aminoethyl)-3-aminopropylmethyldimethoxysilane, N,N-di(2-aminoethyl)-3-aminopropylmethyldiethoxysilane, N-(2-aminoethyl)-N'-(2-aminoethyl)-3-aminopropyltrimethoxysilane, N-(2-aminoethyl)-N'-(2-aminoethyl)-3-aminopropyltriethoxysilane, N-(2-aminoethyl)-N'-(2-aminoethyl)-3-aminopropylmethyldimethoxysilane, N-(2-aminoethyl)-N'-(2-aminoethyl)-3-aminopropylmethyldiethoxysilane, bis(triethoxysilylpropyl) amine, bis(trimethoxysilylpropyl)amine, N-(2-aminobutyl)-3-aminopropyltriethoxysilane, N-(2-aminobutyl)-3-aminopropyltrimethoxysilane, or mixtures thereof.

7. Formulation according to any of Claims 1 to 6, **characterized in that** it comprises as component (iv) at least one organosilane of the general formula II
R⁴SiR⁵ᵣ(R⁶) ₍₃₋ᵣ) (II)
in which R⁴ is a hydrogen or a linear, branched or cyclic alkyl group with from 1 to 18 carbon atoms or a perfluoroalkyl group with from 1 to 16 carbon atoms or a fluoroalkyl group with the form F₃C(CF₂)p(CH₂)₂- where p is from 0 to 14 or an alkyl group having an epoxy-functional radical, R⁵ is a linear, cyclic or branched alkyl group having from 1 to 12 carbon atoms, and R⁶ is an alkoxy group or an aroxy group, and r is 0 or 1 or 2.

8. Formulation according to Claim 7, **characterized in that** the coating composition comprises as component (iv) at least one organosilane from the group consisting of methyltrimethoxysilane, methyltriethoxysilane, n-propyltrimethoxysilane, n-propyltriethoxysilane, n-octyltrimethoxysilane, n-octyltriethoxysilane, i-octyltrimethoxysilane, i-octyltriethoxysilane, hexadecyltrimethoxysilane, hexadecyl-triethoxysilane, octadecyltrimethoxysilane, octadecyltriethoxysilane, tridecafluoro-1,1,2,2-tetrahydrooctyltrimethoxysilane, tridecafluoro-1,1,2,2-tetrahydrooctyltriethoxysilane, 3-glycidyloxypropyltrimethoxysilane, 3-glycidyloxypropyltriethoxysilane or mixtures thereof.

9. Formulation according to any one of Claims 1 to 8, **characterized in that** it comprises as component (iii) condensates or cocondensates of at least one aminoalkylalkoxysilane, at least one organoalkyoxysilane, and, if desired, a silicic ester.

10. Formulation according to Claim 9, **characterized in that** the cocondensate is obtainable from at least one aminoalkylalkoxysilane and one fluoroalkylalkoxysilane.

11. Formulation according to any of Claims 1 to 10, **characterized in that** the fraction of Si-bonded fluoroalkyl functions is from 0.001 to 5% by weight, based on the coating composition.

12. Formulation according to any of Claims 1 to 11, **characterized in that** the coating composition comprises as further component (v) at least one component from the group consisting of solvents, solubilizers, diluents, rheological assistants, inorganic microparticles or nanoparticles, matting agents, pigments, dye, wetting assistants, surfactants, dispersants, hydrolysis catalysts, condensation catalysts, defoamers, film formers, and UV stabilizers.

13. Formulation according to any of Claims 1 to 12, **characterized in that** it comprises as component (v) corundum having an average particle size of from 2 to 40 µm and/or pyrogenic silica having an average particle size of from 2 to 200 nm, it being possible for the microscale or nanoscale particles to be enveloped by aminoalkyl-, alkenyl-, epoxyalkyl-, methacryloyloxyalkyl-, hydroxy-, alkoxy-, acryloyl-, alkyl- and/or fluoroalkyl-functional silanes or siloxanes.

14. Formulation according to Claim 12 or 13, **characterized in that** the fraction of nanoscale and/or microscale particles is from 0 to 30% by weight, based on the coating composition.

15. Formulation according to any of Claims 1 to 14, **characterized in that** the coating composition has a viscosity of less than 3 500 mPa.s.

16. Use of a formulation according to any of Claims 1 to 15 for producing a coating on a substrate.

17. Use of a formulation according to any of Claims 1 to 16 for coating glass, wood, plastic, metal, metal alloys, stone, artificial stone, ceramic or concrete.

18. Use of a formulation according to any of Claims 1 to 16 for imparting water, oil, ink, paint, varnish, dirt, and dust repellency to surfaces.

19. Use of a formulation according to any of Claims 1 to 18 for antigraffiti applications.

20. Use of a formulation according to any of Claims 1 to 19 for corrosion protection applications.

21. Use of a formulation according to any of Claims 1 to 20 for imparting abrasion resistance and/or scratch resistance to surfaces.

22. Coatings obtainable using a formulation according to any of Claims 1 to 21.

23. Articles with a coating according to Claim 22.

## Revendications

1. Préparation anhydre sous forme d'une composition de revêtement durcissant à la lumière, qui contient
(i) au moins une résine époxy ou au moins une résine acrylique ou au moins un monomère de résine acrylique ou au moins un copolymère qui est à base d'un monomère acrylique ou époxyde, ou un mélange des substances utilisées précitées,
(ii) un ester d'acide silicique et/ou au moins un silicate d'alkyle,
(iii) au moins un aminoalkylsilane, un mélange d'aminoalkylsilanes ou de produits de condensation ou de co-condensation de ceux-ci et
(iv) éventuellement un organosilane, un mélanges d'organosilanes ou de produits de condensation ou de co-condensation
dans le cas d'une composition de revêtement contenant un acrylate, le rapport molaire des groupes amino de l'aminoalkylsilane aux groupes acrylate fonctionnels de la résine acrylique étant inférieur à 7:1.

2. Préparation selon la revendication 1, **caractérisée par** une teneur de
2,5 à 50 % en poids en le composant (i),
0,5 à 60 % en poids en le composant (ii),
15 à 90 % en poids en le composant (iii),
0 à 60 % en poids en le composant (iv) et
0 à 50 % en poids en un autre ou plusieurs autres composants (v),
les proportions des composants donnant au total au maximum 100 % en poids.

3. Préparation selon la revendication 1 ou 2, **caractérisée en ce qu'**elle contient en tant que composant (i) au moins une résine époxy aromatique ou une résine époxy aliphatique ou un monomère de résine acrylique ou un copolymère de la série uréthanne-acrylate aliphatique, uréthanne-acrylate aromatique, époxyde-acrylate aliphatique, époxyacrylate aromatique ou polyesteracrylate.

4. Préparation selon l'une quelconque des revendications 1 à 3, **caractérisée en ce qu'**elle contient en tant que composant (ii) du tétraméthoxysilane, du tétraéthoxysilane, du tétrapropoxysilane ou un silicate d'éthyle ayant un degré moyen d'oligomérisation de 2 à 5 ou un silicate de méthyle ou un polysilicate de méthyle ayant un degré moyen de polymérisation de 2 à 10 ou un alcoolate mixte de silicium et aluminium.

5. Préparation selon l'une quelconque des revendications 1 à 4, **caractérisée en ce qu'**elle contient en tant que composant (iii) un aminoalkylsilane de formule générale 1
R₂N[(CH₂)ₓRN]ₙ(CH₂)_{y}SiR¹ₘ(R²)₍₃₋ₘ₎ (I),
dans laquelle les groupes R sont identique sou différents et R représente un atome d'hydrogène ou un groupe alkyle linéaire ou ramifié ayant de 1 à 4 atomes de carbone ou un groupe aminoalkyle de formule R₂N(CH₂)ₓ-, R¹ représente un groupe alkyle linéaire, cyclique ou ramifié ayant de 1 à 8 atomes de carbone et R² représente un groupe alcoxy ou un groupe acétoxy, x représente un nombre entier allant de 1 à 4, y représente un nombre entier allant de 1 à 16, et n est égal à 0 ou 1 ou 2 ou 3 et m est égal à 0 ou 1 ou 2.

6. Préparation selon la revendication 5, **caractérisée en ce que** la composition de revêtement séchant à l'air contient en tant que composant (iii) au moins un aminoalkylalcoxysilane de la série 3-aminopropyltriméthoxysilane, 3-aminopropyltriéthoxysilane, 3-aminopropylméthyldiméthoxysilane, 3-aminopropylméthyldiéthoxysilane, N-(2-aminoéthyl)-3-aminopropyltriméthoxysilane, N-(2-aminoéthyl)-3-aminopropyltriéthoxysilane, N-(2-aminoéthyl)-3-aminopropylméthyldiméthoxysilane, N-(2-aminoéthyl)-3-aminopropylméthyldiéthoxysilane, N,N-di(2-aminoéthyl)-3-aminopropyltriméthoxysilane, N,N-di(2-aminoéthyl)-3-aminopropyltriéthoxysilane, N,N-di(2-aminoéthyl)-3-aminopropylméthyldiméthoxysilane, N,N-di(2-aminoéthyl)-3-aminopropylméthyldiéthoxysilane, N-(2-aminoéthyl)-N'-(2-aminoéthyl)-3-aminopropyltriméthoxysilane, N-(2-aminoéthyl)-N'-(2-aminoéthyl)-3-aminopropyltriéthoxysilane, N-(2-aminoéthyl)-N'-(2-aminoéthyl)-3-aminopropylméthyldiméthoxysilane, N-(2-aminoéthyl)-N'-(2-aminoéthyl)-3-aminopropylméthyldiéthoxysilane, bis(triéthoxysilylpropyl)-amine, bis(triméthoxysilylpropyl)-amine, N-(2-aminobutyl)-3-aminopropyltriéthoxysilane, N-(2-aminobutyl)-3-aminopropyltriméthoxysilane ou des mélanges de ceux-ci.

7. Préparation selon l'une quelconque des revendications 1 à 6, **caractérisée en ce qu'**elle contient en tant que composant (iv) au moins un organosilane de formule générale (II)
R⁴SiR⁵ᵣ(R⁶) ₍₃₋ᵣ₎ (II)
dans laquelle R⁴ représente un atome d'hydrogène ou un groupe alkyle linéaire, ramifié ou cyclique ayant de 1 à 18 atomes de carbone ou un groupe perfluoroalkyle ayant de 1 à 16 atomes de carbone ou un groupe fluoroalkyle de formule F₃C(CF₂)ₚ(CH₂)₂- où p va de 0 à 14, ou un groupe alkyle comportant un radical à fonctionnalité époxy, R⁵ représente un groupe alkyle linéaire, cyclique ou ramifié ayant de 1 à 12 atomes de carbone et R⁶ représente un groupe alcoxy ou un groupe aryloxy et r est égal à 0 ou 1 ou 2.

8. Préparation selon la revendication 7, **caractérisée en ce que** la composition de revêtement contient en tant que composant (iv) au moins un organosilane de la série méthyltriméthoxysilane, méthyltriéthoxysilane, n-propyltriméthoxysilane, n-propyltriéthoxysilane, n-octyltriméthoxysilane, n-octyltriéthoxysilane, iso-octyltriméthoxysilane, iso-octyltriéthoxysilane, hexadécyltriméthoxysilane, hexadécyltriéthoxysilane, octadécyltriméthoxysilane, octadécyltriéthoxysilane, tridécafluoro-1,1,2,2-tétrahydro-octyltriméthoxysilane, tridécafluoro-1,1,2,2-tétrahydro-octyltriéthoxysilane, 3-glycidyloxypropyltriméthoxysilane, 3-glycidyloxypropyltriéthoxysilane ou des mélanges de ceux-ci.

9. Préparation selon l'une quelconque des revendications 1 à 8, **caractérisée en ce qu'**elle contient en tant que composant (iii) des produits de condensation ou de co-condensation d'au moins un aminoalkylalcoxysilane, au moins un organoalcoxysilane et éventuellement un ester d'acide silicique.

10. Préparation selon la revendication 9, **caractérisée en ce que** le produit de co-condensation peut être obtenu à partir d'au moins un aminoalkylalcoxysilane et un fluoroalkylalcoxysilane.

11. Préparation selon l'une quelconque des revendications 1 à 10, **caractérisée en ce que** la proportion de fonctions fluoroalkyle liées à Si va de 0,001 à 5 % en poids, par rapport à la composition de revêtement.

12. Préparation selon l'une quelconque des revendications 1 à 11, **caractérisée en ce que** la composition de revêtement contient comme autre composant (v) au moins un composant choisi dans l'ensemble constitué par les solvants, les tiers-solvants, les diluants, les agents auxiliaires de rhéologie, des microparticules ou nanoparticules inorganiques, les agents de matité, les pigments, un colorant, les adjuvants mouillants, les tensioactifs, les dispersants, les catalyseurs d'hydrolyse, les catalyseurs de condensation, les antimousses, les agents filmogènes et les stabilisants UV.

13. Préparation selon l'une quelconque des revendications 1 à 12, **caractérisée en ce qu'**elle contient en tant que composant (v) du corindon ayant une taille moyenne de particule de 2 à 40 µm et/ou de l'acide silicique pyrogéné ayant une taille moyenne de particule de 2 à 200 nm, les micro- ou nanoparticules pouvant être enrobées avec des silanes ou siloxanes à fonctionnalité aminoalkyle, alcényle, époxyalkyle, méthacryloxyalkyle, hydroxy, alcoxy, acryloyle, alkyle et/ou fluoroalkyle.

14. Préparation selon la revendication 12 ou 13,
**caractérisée en ce que** la proportion des micro-et/ou nanoparticules va de 0 à 30 % en poids, par rapport à la composition de revêtement.

15. Préparation selon l'une quelconque des revendications 1 à 14, **caractérisée en ce que** la composition de revêtement a une viscosité de moins de 3 500 mPa.s.

16. Utilisation d'une préparation selon l'une quelconque des revendications 1 à 15, pour la production d'un revêtement sur un support.

17. Utilisation d'une préparation selon l'une quelconque des revendications 1 à 16, pour le revêtement du verre, du bois, de matière plastique, de métal, d'alliages de métaux, de la pierre, de la pierre artificielle, de la céramique ou du béton.

18. Utilisation d'une préparation selon l'une quelconque des revendications 1 à 16, pour le traitement hydrofuge, oléofuge, repoussant l'encre, la couleur, la peinture, antisalissure et anti-poussière de surfaces.

19. Utilisation d'une préparation selon l'une quelconque des revendications 1 à 18, pour des applications anti-graffiti.

20. Utilisation d'une préparation selon l'une quelconque des revendications 1 à 19, pour des applications anti-corrosion.

21. Utilisation d'une préparation selon l'une quelconque des revendications 1 à 20, pour le traitement résistant à l'abrasion et/ou résistant à la rayure de surfaces.

22. Revêtements qui peuvent être obtenus à l'aide d'une préparation selon l'une quelconque des revendications 1 à 21.

23. Articles ou objets munis d'un revêtement selon la revendication 22.
